# EUROPÄISCHE PATENTANMELDUNG

(11) **EP 0 880 244 A2**
(43) Veröffentlichungstag der Anmeldung: **25.11.1998**
(21) Anmeldenummer: 98103967.0
(22) Anmeldetag: 06.03.1998
(51) Int. Cl.: H04H 1/00

(54) **Verfahren zur Aufbereitung von Daten für digitale Rundfunkübertragung**

(30) Priorität: 24.04.1997 DE 19717248
(71) Anmelder: ROBERT BOSCH GMBH, 70442 Stuttgart (DE)
(72) Erfinder: Unbehaun, Matthias, 14600 Västerhaninge (SV); Stierand, Ingo, 26121 Oldenburg (DE)

(57) **Zusammenfassung**

Es wird ein Verfahren zur Aufbereitung von Daten für digitale Rundfunkübertragung in einem Multiträgerübertragungsverfahren vorgeschlagen, wobei die Daten in Form von logisch geordneten Bündeln zusammengefaßt werden und diese Bündel in einem Datenmultiplexer verwaltet, zwischengespeichert, und anschließend weiterverarbeitet werden.

## Beschreibung

### Stand der Technik

Die Erfindung geht aus von einem Verfahren zur Aufbereitung von Daten für digitale Rundfunkübertragung in einem Multiträgerübertragungsverfahren nach der Gattung des Hauptanspruchs.

Das digitale Rundfunksystem DAB (Digital Audio Broadcasting) nach ETS 300 401 dient vor allem der Übertragung von nach dem MPEG-Standard codierten Audiodaten. Dabei werden in zunehmendem Maße multimediale Anwendungen mit einer Kombination von Ton und Bild verwirklicht. Diensteanbieter solcher multimedialen Anwednungen müssen über die komplexe Verwaltung und Struktur der DAB-Datenkanäle Kenntnisse besitzen, um Zusatzinformationen wie Bilder, Texte, usw. zu definierten Audiodaten zur Verfügung zu stellen. Bisher ist es jedem Dienstanbieter selbst überlassen, wie die Zusammenstellung seiner Daten erfolgt, die dann in einem normierten DAB-Übertragungsrahmen gesendet werden.

### Vorteile der Erfindung

Das erfindungsgemäße Verfahren mit den kennzeichnenden Merkmalen des Hauptanspruchs hat demgegenüber den Vorteil, daß der Diensteanbieter auf eine normierte Schnittstelle zurückgreifen kann, die für ihn einen einfachen und individuell programmierbaren Zugangspunkt zum DAB-System darstellt. Zudem wird der Aufwand für den Diensteanbieter minimiert, indem zusammengehörige Daten in logischen Bündeln zusammengefaßt werden. Vorteilhafterweise wird durch die zeitliche Entkopplung bei der Erstellung und der Sendung der Daten nämlich durch eine Zwischenspeicherung im Datenmultiplexer die Verwaltung vereinfacht. Durch die Zwischenspeicherung wird zudem Transportkapazität auf den Übertragungsleitungen eingespart. Zusätzlich wird die Transparenz des Transportnetzes und der DAB-spezifischen Geräteschnittstellen für den Diensteanbieter erhöht.

Durch die in den Unteransprüchen aufgeführten Maßnahmen ist eine vorteilhafte Weiterbildung und Verbesserung des im Hauptanspruch angegebenen Verfahrens möglich.

Besonders vorteilhaft ist es, daß die logischen Bündel aus Texten und Bildern zusammengesetzt werden, wobei gleichzeitig Zusatzinformationen in einfache Art und Weise zugeordnet werden können.

Vorteilhafterweise wird die Schnittstelle unabhängig vom Transportprotokoll, das die Übertragung der Daten zwischen Diensteanbieter und Datenmultiplexer bewirkt eingesetzt. Dadurch ist der Diensteanbieter unabhängig von seiner Anbindung an ein bestimmtes Netz.

Vorteilhafterweise werden die logischen Bündel in einer zentralen Datenbank des Datenmultiplexers gespeichert, und erst nach einer Konsistenzprüfung der Daten und Zusatzinformationen mit einem Übertragungsprotokoll übertragen. Dadurch werden die Systemressourcen des DAB-Systems mit einer zentralen Verwaltung optimal ausgenützt. Gleichzeitig ist gewährleistet, daß die Daten den Anforderungen einer Übertragung im DAB-Verfahren genügen.

### Zeichnung

Ein Ausführungsbeispiel der Erfindung ist in der Zeichnung dargestellt und in der nachfolgenden Beschreibung näher erläutert. Es zeigt Figur 1 den Übertragungsweg im DAB-Verfahren, Figur 2 ein logisches Bündel und Figur 3 den schematischen Aufbau der Schnittstelle und des Datenmultiplexers.

### Beschreibung des Ausführungsbeispiels

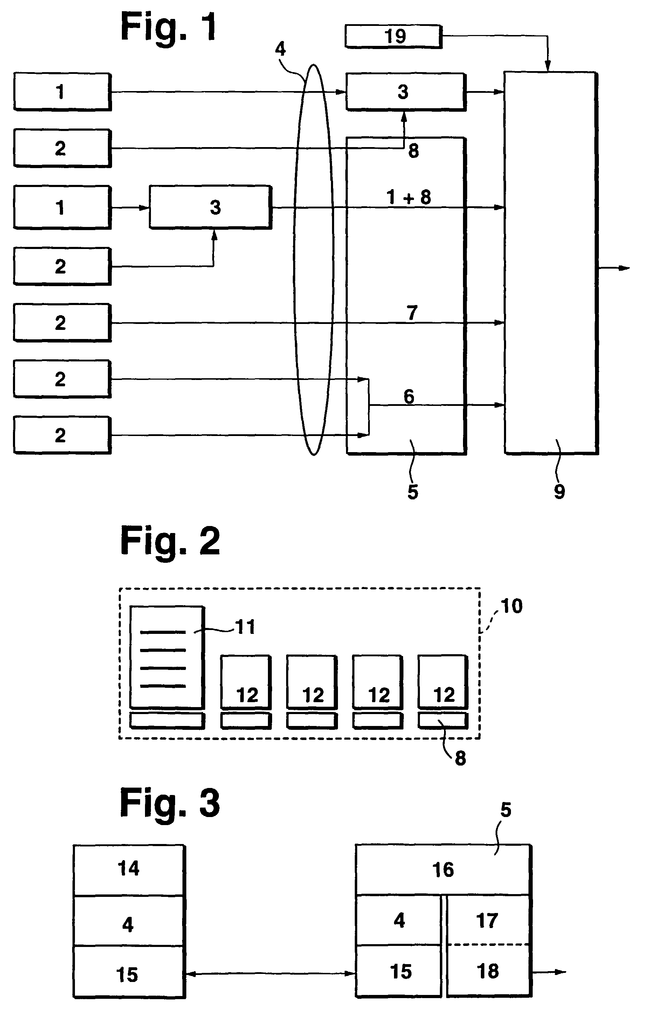

In Figur 1 sind schematisch eine Vielzahl möglicher Daten 2 und Audiodaten 1 dargestellt, die in den Datenmultiplexer 5 eingehen. Der Datenmultiplexer 5 gibt Daten im Packet-Mode 6, im Stream-Mode 7, sowie Audiodaten 1 zusammen mit Zusatzinformationen 8 an den DAB-Multiplexer 9 weiter. In MPEG-Enkoder 3 werden Audiodaten 1 und Daten 2 zusammengeführt. Dem Datenmultiplexer vorgeschaltet befindet sich die Schnittstelle 4. Der Multiträger-Multiplexer 9 erhält zusätzliche Steuerdaten 19.

Ein Diensteanbieter hat die Aufgabe, die Vielzahl der Audiodaten 1 und der weiteren Daten 2 dem Benutzer in geeigneter Form zur Verfügung zu stellen. In einem Rundfunksystem besteht das grundsätzliche Problem darin, daß Informationen vom Benutzer nicht interaktiv abgerufen werden können sondern über den Rundfunkkanal permanent verteilt werden müssen. Den speziellen Anforderungen des DAB-Verfahrens wird mit dem Multiträger-Multiplexer (9) und einem standardisierten Übertragungsverfahren Rechnung getragen. Dabei stellt das DAB-Verfahren an verschiedene Dienste angepaßte Übertragungsmechanismen zur Verfügung:
1. Der Fast Information Data Channel (FIDC) enthält Steuerdaten 19 zur Verwaltung des Multiträger-Multiplexers (9).
2. Program Associated Data (PAD) werden dem MPEG-Bitstrom eingefügt. Diese Zusatzdaten 8 sind aufgrund der Einbettung in die Audiodaten 1 mit diesen inhaltlich verbunden.
3. Im Stream-Mode (7) wird ein Kanal konstanter Bitrate für kontinuierliche Datenströme zur Verfügung gestellt.
4. Im Packet-Mode (6) werden Anwendungen mit nicht konstanten geringen Datenraten in Form adressierbarer Pakete übertragen. Innerhalb dieser Datenkanäle erfolgt die Übertragung der Zusatzdaten mit einem einheitlichen Transferprotokoll.

Für eine Sendung werden meist mehrere Objekte zu einer Sendung gruppiert. Diese Objekte können aus Audiodaten, Bildern, Texten, Querverweisen usw. bestehen.

Figur 2 zeigt die Struktur eines Bündels. Das Bündel 10 enthält zunächst das Zentralelement 11 einer Multimedia-Präsentation. Diesem Zentralelement zugeordnet sind weitere Eelement, beispielsweise Texte 12 und Bilder 13, die mit dem Zentralelement über Querverweise verknüpft sind und vom Benutzer ausgewählt werden können, um die darin enthaltenen Information zu lesen und zu betrachten. Zu jedem einzelnen Bild oder Text gehört eine Zusatzinformation 8.

Ausgangspunkt des Bündels ist die Homepage 11. Diese enthält sowohl die erste Textseite als auch die Verbindungen auf weitere Texte 12 und Bilder 13. Im Empfänger ist eine solche Sammlung nur nutzbar, wenn die einzelnen Dateien nach der Übertragung in einer definierten Struktur, d.h. an bestimmten Positionen im Dateisystem abgelegt werden. Nur so können die Verbindungen zwischen Homepage 11 und Texten 12 und Bildern 13 erhalten bleiben. Da der Empfänger keine Informationen nachfordern kann, müssen die gesamten Informationen eines Bündels komplett übertragen werden. Für den Diensteanbieter besteht die Aufgabe, ein solches Bündel zu erstellen und auszusenden. Die Verwaltung der Bündel wird vom Datenmultiplexer 5 übernommen. Die Zusatzinformationen 8 bestimmen das Verhalten der einzelnen Objekte im Empfänger und im Übertragungskanal. Der Diensteanbieter kann in den Zusatzinformationen z.B. die Anzeigezeit einer Textseite bestimmen, wie oft sie wiederholt werden soll, zu welchem Zeitpunkt sie wiederholt werden soll, und ob sie für eine spätere Verwendung im Empfänger zwischengespeichert werden muß. Das Erstellen des Bündels befreit den Diensteanbieter von der Aufgabe, bestimmte Informationen in bestimmten DAB-Übertragungskanälen einzuspeisen. Für den Diensteanbieter wird der Ablauf einer Sendung über Herstellung einzelner Objektbündel vereinfacht. Wie Texte, Bilder und Zusatzinformationen übertragen werden, ob sie über den FIDC oder über die Zusatzinformationen der Audiodaten oder als Datenpaket im Packet-Mode übertragen werden, ist für den Diensteanbieter nicht ersichtlich und für die Durchführung des Verfahrens nicht notwendig.

Der Diensteanbieter erhalt auf seinem Arbeitsplatzrechner eine standardisierte Schnittstelle. Über diese Schnittstelle werden verschiedene Befehle erkannt und ausgeführt. Er erstellt eine komplette Service-Komponente bestehend aus mehreren Bündeln zu seinen Audiodaten. Die Schnittstelle läßt folgende in der Tabelle 1 aufgeführten Funktionen zu:

| | |
|---|---|
| Anlegen einer Service-Komponente {Die Service-Komponente bleibt solange geöffnet, wie sie für den Benutzer im Empfänger erreichbar sein soll.} | Create_SC |
| Beenden einer Service-Komponente {Der Benutzer kann die Komponente nicht mehr 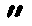 sehen".} | Destroy_SC |
| - Abfrage des Status einer Service-Komponente | Status_of_SC |
| Erzeugen eines neuen Bündels | Create_Bundle |
| Öffnen eines existierenden Bündels | Open_Bundle |
| Schließen eines Bündels, im Anschluß daran kann es aktiviert,d.h. gesendet werden. | Close_Bundle |
| Abfrage des Status eines Bündels | State_of_Bundle |
| Aktivieren eines Bündels | Activate_Bundle |
| Deaktivieren (Beenden der Sendung) eines Bündels | Deactivate_Bundle |
| Löschen eines Bündels | Delete_Bundle |
| Operationen auf Elemente: Einfügen | Insert_Element |
| Operationen auf Elemente: Löschen | Delete_Element |
| Anfügen eines Zeitstempels | Insert_Stamp |

Diensteanbieter können diese Schnittstelle 4 in ihre eigenen Software auf dem Arbeitsplatzrechner integrieren, um so zu sendende Daten aufzubereiten. Nachdem die Daten in der Schnittstelle 4 nach den oben gelisteten Befehlen konfiguriert wurden, werden sie netzunabhängig zum Datenmultiplexer 5 transferiert. Dabei verwendet die Schnittstelle einen netzunabhängigen Mechanismus zum Datentransfer, wobei eine Anpassung an eine Netzstruktur möglich ist. Z.B. kann das Transportnetz Novell für die Vernetzung von Arbeitsplatz und Datenmultiplexer verwendet werden. Es werden dabei die vom Novell-Protokoll bereitgestellten File- Transfermechanismen benutzt. Die Network Adaptive Layer besteht in diesem Fall aus der Ethernet-Karte und dem dazugehörigen Treiber. Von der Schnittstelle 4 wird nur den Zugriff auf die ISO-OSI Layer III übernommen. Erfolgt die Anbindung an den Datenmultiplexer 5 über eine oder mehrere ISDN-Leitungen, übernimmt die ISDN-Karte und der zugehörige Treiber die Anpassung an das Netz. Auch hier wird die ISDN-Unterstützung für den Datentransfer benutzt. Auch hier sorgt die Schnittstelle für den Auf- und Abbau der Verbindung auf ISO-OSI Layer III. Die Dienstanbindung über ein analoges Telefonmodem erfolgt nach gleichen Gesichtspunkten wie bei einer Verbindung über das digitale ISDN-Netz. Es ist auch möglich, den Datentransfer mit dem Service Transport Interface STI zu bewirken. Dieses Interface beinhaltet ein Transportprotokoll, mit dem einzelne Dienste zum Datenmultiplexer 5 zugeführt werden können. Der Begriff Dienst umfaßt dabei nicht nur die Zusatzinformationen 8, sondern auch Audio- 1 und DAB-spezifische Kanäle wie die Steuerdaten 19.

Figur 3 zeigt ein Schema der Schnittstelle 4 in Verbindung mit dem Datenmultiplexer 5. Die Benutzerseite besteht aus der Anwendersoftware 14, der eigentlichen Schnittstelle 4 sowie dem Transportnetzwerk 15. Auf Empfängerseite, dem Datenmultiplexer 5 befindet sich das Gegenstück des Transportnetzwerks 15, der zweite Teil der Schnittstelle 4, ein Scheduler 16, ein Router 17 sowie die Kanalanpassung 18. Die beim Benutzer über die Schnittstelle 4 erstellte Daten gehen über die Verbindung der Transportnetzwerke 15 in den Datenmultiplexer 5 über. Im Datenmultiplexer 5 arbeitet der zweite Teil des Network Adaptive Layer der Schnittstelle 4 Hier wird dem folgenden Scheduler 16 der Eingang zum Netz bereitgestellt. Die Konfiguration- und Steuerinformationen (wie Sendezeiten, Bitraten, Übertragungskanäle) werden vom Scheduler 16 aufbereitet und in einer zentralen Datenbank abgelegt. Hier wird auch das kanalunabhängige Übertragungsprotokoll erzeugt. Der Scheduler führt ebenfalls eine Konsistenzprüfung der zu sendenden Daten durch. Der Router 17 mit der Kanalanpassung 18 verwaltet die Kanalkapazitäten und teilt dem Scheduler einen Datenkanal zu. Dies geschieht über die zentrale Datenbank. Die vom Scheduler kommenden Daten werden über den Router verteilt und in der Kanalanpassung mit dem kanalspezifischen Übertragungsprotokoll übersehen. Im Datenmultiplexer 5 mit seinen einzelnen Verarbeitungsstufen erfolgt die Verwaltung der verschiedenen Datendienste. Die begrenzte im DAB-Multiplexer zur Verfügung stehende Datenrate wird entsprechend Anforderungen der Diensteanbieter aufgeteilt. Die einzelnen Service-Komponenten eines Dienstes kommen über die Schnittstelle 4 als logisch geschlossene Bündel 10 im Datenmultiplexer 5 an. Da in den DAB-Datenkanäle spezifische Übertragungsprotokolle notwendig sind, müssen diese Datenobjekte entsprechend paketiert und mit Steuerinformationen versehen werden.

## Patentansprüche

1. Verfahren zur Aufbereitung von Daten für digitale Rundfunkübertragung in einem Multiträgerübertragungsverfahren, insbesondere Audiodaten (1) und Daten (2) mit Zusatzinformationen (8), dadurch gekennzeichnet, daß die Daten (2) in einer Schnittstelle (4) beim Diensteanbieter in logische Bündel (10) zusammengefaßt werden und diese Bündel (10) in einem Datenmultiplexer (5) verwaltet, zwischengespeichert und anschließend in einem Multiträger-Multiplexer (9) verarbeitet werden.

2. Verfahren nach Anspruch 1, dadurch gekennzeichnet, daß die logischen Bündel (10) aus einer Homepage (11) mit Texten (12) und Bildern (13) zusammengesetzt werden, wobei den einzelnen Texten (12) und Bildern (13) Zusatzinformationen (8) zugeordnet werden.

3. Verfahren nach Anspruch 1 oder 2, dadurch gekennzeichnet, daß die Schnittstelle (4) zwischen Diensteanbieter und Datenmultiplexer (5) unabhängig vom Transportnetzwerk der Daten zwischen Diensteanbieter und Datenmultipexer eingesetzt wird.

4. Verfahren nach Anspruch 1 bis 3, dadurch gekennzeichnet, daß die Bündel (10) im Datenmultiplexer (5) in einer zentralen Datenbank abgelegt werden, anschließend das Übertragungsprotokoll für den Transport zum Multiträger-Multiplexer (9) erzeugt und eine Konsistenzprüfung der Daten (2) und Zusatzinformationen (8) durchgeführt wird.
